# EUROPEAN PATENT APPLICATION

(11) **EP 3 780 487 A1**
(43) Date of publication of application: **17.02.2021**
(21) Application number: 19191320.1
(22) Date of filing: 12.08.2019
(51) Int. Cl.: H04L 9/32, H04L 29/06, G06F 21/64

(54) **SYSTEM AND METHOD FOR ELECTRONIC SIGNATURE CREATION AND MANAGEMENT FOR LONG-TERM ARCHIVED DOCUMENTS**

(71) Applicant: ADUCID s.r.o., 61900 Brno (CZ)
(72) Inventor: Rihak, Miroslav, 61600 Brno (CZ); Neumann, Libor, 15500 Praha 5 (CZ)
(74) Representative: Hartvichova, Katerina

(57) **Abstract**

The present invention provides a system and method for electronic signature creation and management.

The system contains
- an electronic signature managing authority having means for authentication of users, means for generating electronic signature creation data and issuing certificates, means for creating time stamps, and a database of electronic signatures and time stamps, wherein the means for generating electronic signature creation data and issuing certificates are configured to generate single-use electronic signature creation data and certificate and to delete the electronic signature creation data after signing one document or message, and wherein the means for creating time stamps are configured to generate a time stamp immediately after the signing of one document or message and before deletion of the electronic signature creation data used to sign the document or message, and optionally to create a new time stamp before the expiry of validity of any time stamp in the database,
- an identity verification authority having means for authentication of users, means for identity proofing of users, and
- an archive provider has a database for storing the signed documents or messages.

## Description

### Field of Art

The present invention relates to a system and method for electronic signature creation and for management of long-term archived documents, the said system having a significantly increased security.

### Background Art

An electronic signature is a mathematical scheme for verifying the authenticity of digital/electronic messages or documents. It allows to validate the sender as well as the integrity of the message or document contents.

Typically, an electronic signature scheme includes three steps: issuing of a signature creation data and a signature certificate for the user (most commonly based on a private key contained in the signature creation data and a corresponding public key contained in the signature certificate), signing (producing an electronic signature), and signature verification. Each step is carried out by a corresponding algorithm. Suitable algorithms are known in the art. The signing step often includes the sub-steps of calculating a hash value of the document or message content and encrypting the hash value by the private key to create the electronic signature. The signature verification step usually involves decrypting the electronic signature by the public key included in the certificate and calculating the hash of the original message or document - if the calculated hash values are the same, the message or document is authentic and has not been tampered with.

The data necessary for creating the electronic signature (or "signature creation data") and a signature certificate are issued by a certification authority, and are usually stored by the user in the user's computer or on a dedicated piece of hardware, such as chip cards or USB tokens. The document to be signed is usually located in the user's computer memory and the signing step is performed with the piece of hardware connected to the computer, said piece of hardware carrying the private key corresponding to the signature creation data.

The certification authority is an authority which is entrusted with generating signature creation data compliant with technical standards and legal requirements. The signature creation data have a limited validity, or they can be revoked. Often, after expiry of the validity of the signature creation data, it is not possible to verify the signed documents any longer.

The problem of verification of the signature after the expiry of the signature creation data has been addressed by introduction of a time stamp. A time stamp is a mechanism allowing to prove the integrity of data, verifying that the data existed in a specific moment and has not been altered since that moment. The time stamp is provided by a trusted third party, which is usually referred to as a time stamping authority. There are existing technical standards for the time stamps, such as the standard RFC 3161. The time stamp is derived from the original message or document or from its hash, from its electronic signature and from the time information. The derivation may include, for example, creation of a hash value. The time stamp is usually hashed and encrypted by the private key of the time stamping authority. The time stamp should be created only when the original electronic signature or the previous time stamp is valid. Thus, the integrity and authenticity of the original document and its signature can be verified by means of a time stamp long after the the original electronic signature creation data have lost their validity (e.g., by expiry or revocation).

When signed documents are archived, the default procedure is to create a new time stamp just before the expiry of the previous time stamp or of the electronic signature, and this new time stamp is added to the document stored in the archive. During the archivation period, new versions of the document with new time stamps are added to the archive or replace the previous versions of the document in the archive.

It is also known to use time stamps for the archiving purposes, the time stamps being stored and managed separately from the original document.

There exists also a so-called remote signature - this technology is also called "generating or managing electronic signature creation data on behalf of the signatory". In the remote signature system, an electronic signature managing authority (also called "qualified trust service provider") manages the electronic signature resources for the users and creates electronic signatures on behalf of the users. In this case, the user is typically remotely authenticated to the electronic signature managing authority and the electronic signature managing authority is responsible for using the correct electronic signature creation data for the respective authenticated user.

In this case, the electronic signature managing authority typically manages a large number of electronic signature creation data and thus assembles a valuable asset database that needs to be safely protected. The protection is demanding and costly, as it includes the need to guarantee the availability of electronic signature creation data even in emergencies such as equipment failure while ensuring high security, thus preventing unauthorized persons from gaining access to or obtaining a copy of electronic signature creation data. To do this, special technical arrangements with high security (HSMs) in redundant configurations and complex spatial and personnel security measures are often used.

The known and above described systems and procedures have a number of disadvantages. They either require complex management from users and authorities, such as care for individual electronic identity media, renewal of electronic signature certificates, rewriting or supplementing archives of long-term archived documents. Organizational, competency and technical complications arise in situations where the administrator of long-term archived electronically signed documents wishes to use the services of an archive management service provider. The present invention aims at overcoming these disadvantages.

### Disclosure of the Invention

The present invention provides a system and method for electronic signature creation and management, suitable for long-term archived documents. The system and method of the invention are based on the remote signature paradigm, and provide a high security for the electronic signature users.

The system contains an electronic signature managing authority (or "qualified trust service provider"), an identity verification authority, and an archive provider. The electronic signature managing authority, the identity verification authority, and the archive provider may be separate entities or sub-systems, or they may form one or two entities or one or two sub-systems. E.g., in some embodiments, the electronic signature managing authority and the identity verification authority may form one entity or one sub-system, and the archive provider may be a separate entity or a separate sub-system. In other embodiments, the electronic signature managing authority and the archive provider may form one entity or one sub-system, and the identity verification authority may be a separate entity or a separate sub-system.

The electronic signature managing authority has means for generating electronic signature creation data and issuing certificates, means for creating time stamps, and a database of electronic signatures and time stamps, wherein the means for generating electronic signature creation data and issuing certificates are configured to generate single-use electronic signature creation data and certificate and to delete the electronic signature creation data and optionally to revoke the electronic signature certificate after signing one document or message, and wherein the means for creating time stamps are configured to generate a time stamp immediately after the signing of one document or message and before deletion of the electronic signature creation data used to sign the document or message, and optionally to create a new time stamp before the expiry of validity of any time stamp in the database. The electronic signature managing authority further has means for authentication of users; and may optionally also have means for verifying electronic signatures and time stamps.

The identity verification authority has means for authentication of users and means for identity proofing of users.

The archive provider has a database for storing the documents or messages, optionally together with electronic signatures and time stamps. The archive provider may be a server or a database system.

The method of the present invention uses the system as described above, and contains the following steps:
- the electronic signature managing authority receives a request to sign a document or message from a user, and the electronic signature managing authority and the identity verification authority perform the authentication of the user;
- the identity verification autority provides to the electronic signature managing authority user identity data of the user;
- the electronic signature managing authority generates an electronic signature creation data and signature certificate;
- the electronic signature managing authority signs the document using the generated electronic signature creation data, thus producing an electronic signature;
- the electronic signature managing authority creates a time stamp for the produced electronic signature, and then deletes the electronic signature creation data (including the private key);
- the electronic signature managing authority transmits the signed document or message to the archive provider, optionally together with the electronic signature and the time stamp;
- the electronic signature managing authority saves the electronic signature and the time stamp, while the archive provider saves the signed document or message, optionally together with the electronic signature and the time stamp,
- optionally the electronic signature managing authority creates a new time stamp before the expiry of validity of the time stamp, saves the new time stamp, and optionally transmits the new time stamp to the archive provider.

The need to create a new time stamp based on the previous time stamp is dependent on the validity period of the time stamps and on the archiving period of the documents or messages. If the archiving period is shorter than the validity period of the time stamps, it is not necessary to create new time stamps. On the contrary, if the archiving period is longer than the validity period of the time stamps, it is necessary to create a new time stamp for each time stamp before its expiry, in order to allow the verification of authenticity and integrity of the documents or messages.

The new time stamp is created by the electronic signature managing authority on the basis of the electronic signature and the valid time stamp which are stored in the database of the electronic signature managing authority. The previous (no longer valid) time stamps can be used for creating the new time stamp, in addition to the electronic signature and the valid time stamp. Alternatively, the new time stamp may be created by the electronic signature managing authority in cooperation with the archive provider, on the basis of the electronic signature and the valid time stamp stored in the database of the electronic signature managing authority and the signed document or message stored in the database of the archive provider.

The archive provider may or may not store all versions of the signed document or message with new time stamps or modify the originally saved document or message by a new time stamp.

The use of a single-use electronic signature creation data, which are used to sign only one document or message, significantly increases the security of the system. Even if an attacker could obtain the electronic signature creation data within the short time it exists, it is only destined for one use. Furthermore, there is no need to store electronic signature creation data and to take protective measures to ensure sufficient security of such database, as the electronic signature creation data are created for the single use and then deleted (or removed) from the system. The electronic signature creation data are not saved or stored anywhere on a permanent medium during the process (at any moment between their issuing and their deletion or revocation, they only exist in operational memory or in a hardware security module (HSM) and then they are removed from the operational memory or HSM). The electronic signature creation data are not stored anywhere in the system after they are used for the creation of one electronic signature, neither outside the system, and there are no back-up copies of electronic signature creation data.

The electronic signature managing authority stores the electronic signatures and the time stamps, but does not manage and store the archived documents or messages. Only the archive provider stores the archived documents or messages, but the archive provider preferably does not store the electronic signatures and time stamps. This further increases the security of the system and supports the guarantee of the authenticity and integrity of the documents provided by the system.

The electronic signatures and the time stamps are stored by the electronic signature managing authority, only in some embodiments the electronic signatures and the time stamps can optionally additionally be stored by the archive provider.

The creation of an electronic signature creation data with sufficient cryptographic parameters is usually very demanding in terms of computing power and time. Considering that for each operation of signing a document or a message, a new electronic signature creation data must be generated, this could limit the capacity of the service or increase the technical requirements imposed on the hardware and software equipment of the electronic signature managing authority and thus increase the costs of the service. This potential issue can be overcome by generating cryptographic elements for electronic signature creation data at the time when the electronic signature managing authority has a free (i.e., not fully used up) computing capacity. Such cryptographic elements are not final electronic signature creation data, but represent the electronic signature creation data elements which are most demanding in terms of computing power necessary for their creation. The generated cryptographic elements for electronic signature creation data are stored solely in the operational memory or hardware security module of the electronic signature managing authority computer. They are never stored on any external memory media. The said cryptographic elements may then be used for generating electronic signature creation data when needed, for example when the number of requests for signing a document or a message exceeds the available computing power.

For the purpose of authentication, each user may be provided with electronic identity means which are then used by the identity verification authority (in cooperation with the electronic signature managing authority) for authenticating the user after receiving the request for signing a document. Means and methods for creating electronic identity means (also often referred to as authentication factors, such as user names, passwords, local factors, biometric factors, etc.) and for authentication of users by means of such electronic identity means are known in the art.

The identity verification authority and the electronic signature managing authority authenticate the user when the user requests signing of a document. To this end, a secure channel is usually created between the two authorities, through which the user identity data needed for generating an electronic signature creation data and signature certificate are transmitted.

The system and method of the present invention enable the verification of authenticity and integrity of the signed documents or messages. All necessary data, i.e., the document or message and the valid time stamp, optionally also previous time stamps and the electronic signature, are available in the system.

The verification of authenticity and integrity of the signed document or message is usually performed by known procedures using the original document or message, the electronic signature, and all time stamps up to a currently valid time stamp. Computer programmes exist for this purpose, using standard data formats containing the needed data. Such programmes and standards exist only for some document and message formats. For other document formats, certified verification providers provide the verification services. However, up to now, the user (or any third party) requesting the verification must provide complete data. In the present invention, the user only needs to provide the original document (optionally with the electronic signature and the first time stamp), and the remaining data needed for verification is provided by the electronic signature managing authority, and optionally archive provider.

The verification of authenticity and integrity of the signed document or message according to the present invention may in some embodiments be carried out so that the signed document or message is an entry of the verification process and the verification process then uses the valid time stamp and optionally the previous time stamps and the electronic signature stored in the database of the electronic signature managing authority. In these embodiments, the user (or any third party) requests the verification by entering the original document or message (i.e., the document or message which was subject to signing), and optionally also the electronic signature with the first time stamp, the first time stamp being the stamp which was generated immediately after signing. The electronic signature managing authority then provides all the remaining time stamps (as well as the electronic signature if not provided as part of the entry data) from its database. The verification can then be performed by verification means of the electronic signature managing authority. Alternatively, the electronic signature managing authority may create a data file in a standard format for verification, and the verification may be performed by a third party.

In some embodiments, the verification of authenticity and integrity of the signed document or message may be perfomed by a third party which obtains from the archive provider and from the electronic signature managing authority, respectively, the signed document or message and the valid time stamp and optionally the previous time stamps and the electronic signature.

### Definitions:

Means for authentication of users are means configured for performing the verification of the identity of the user and/or of his authentication means. Methods and algorithms for verification are well known and are usually based on verification whether the user or his authentication means possess an information which is available only to the authorized user or the authorized authentication means. Electronic identity means may be used for the authentication of users.

Authentication means are means which are possessed by the respective user and are used for connecting to the electronic signature managing authority, for requesting the signing of the message or document, and for authentication of the user. Authentication means may include a computer, a mobile phone, a tablet, a smart watch, a smart card, an authentication calculator, an authentication token, hardware one-time password generator.

Means for identity proofing of users are means configured to verify the physical identity of the user and/or his authentication means, typically using a personal document such as an ID card or a unique production number of the authentication means. Systems, methods and algorithms for identity proofing are well known. Most typically, identity proofing is carried out by an employee of the electronic signature managing authority or by a specialized service provider carrying out the identity proofing externally for the electronic signature managing authority, based on visual comparison of the user with his photograph on his ID card. Knowledge-based identity proofing systems and dynamic knowledge-based identity proofing systems are also available, which are based on knowledge of information that can be available only to the rightful user. Furthermore, remote identity proofing systems are available on the market. The means for identity proofing of users present in the system of the invention may also be configured to securely take over the identity proofing information from third parties. Typically, the user and/or his authentication means have to undergo identity proofing only once, and then again only when personal information of the user is changed, or when the authentication device is replaced.

Means for creating time stamps are means configured to create a time stamp using known protocols and algorithms. For example, some algorithms include creating a hash of the message or document, at least one previous time stamp or electronic signature, and time information, and encrypting the hash using a private key possessed by the electronic signature managing authority. Other known algorithms of creating time stamps may be used.

The electronic signature managing authority may be a server or a computer system.

The electronic signature may be an encrypted hash value generated using the electronic signature creation data. The electronic signature creation data and certificate in this invention are single-use electronic signature creation data and certificate, i.e., they are generated with a very limited validity period (in the order of seconds or minutes). The signature creation data are deleted immediately after a single use for signing a document or a message and after the creation of the electronic signature. The signature creation data (or electronic signature creation data) typically are or contain the private key of a private/public key data pair. The signature certificate typically contains the public key of the private/public key data pair. The signature certificate may or may not be revoked after the single use for signing a document or a message. It is preferred that the signature certificate is not revoked, as the revocation increases the technical requirements for the system, e.g., requires entry to the list of revoked certificates. It is practically more convenient if the signature certificate is merely left to expire. A signature certificate principally cannot be used to create an electronic signature on its own, without the accompanying electronic signature creation data (which are deleted immediately after the single use for signing a document or a message).

The users are typically natural persons or legal persons who need to sign documents electronically and to archive them.

The user identity data are data relating to the physical identity of the user which are used for creating the electronic signature certificate. They are obtained and verified during the identity proofing procedure.They can be provided by the identity verification authority to the electronic signature managing authority each time an electronic signature certificate is created. This avoids the need for the user to undergo a separate identity proofing procedure each time when an electronic signature creation data and an electronic signature certificate are created and a document is signed.

### Example of carrying out the Invention

A user having a mobile phone as an authentication means undergoes identity proofing at the identity verification authority. The identity proofing typically includes a personal visit of the user in an office of the identity verification authority where the identity of the user and/or of his authentication means is verified. The level of the identity proofing must comply with the requirements necessary for issuing an electronic signature creation data. However, no electronic signature creation data are issued to the user.

When the user needs to sign a document by an electronic signature, he sends a request to the electronic signature managing authority. The electronic signature managing authority and the identity verification authority authenticate the user and/or his authentication device, and the identity verification authority provides to the electronic signature managing authority the user identity data.

After successful authentications, the electronic signature managing authority creates an electronic signature creation data, typically a private key, and a public key and issues electronic signature certificate. To this end, the electronic signature managing authority uses user identity data provided by the identity verification authority after authentication of the user. The electronic signature managing authority uses the electronic signature creation data to create an electronic signature and a time stamp. Immediately afterwards, the electronic signature managing authority deletes the electronic signature creation data. The electronic signature creation data are not saved or stored anywhere on a permanent medium during the process (at any moment between their issuing and their deletion or revocation, they only exist in operational memory or HSM and then they are removed from the operational memory or the HSM).

The signed document is stored with the archive provider. The time stamp, and any further time stamps created during the time of storage of the document, may optionally be stored together with the document by the archive provider, and they are always stored separately by the electronic signature management authority.

## Claims

1. A system for electronic signature creation and management, which contains
- an electronic signature managing authority having means for authentication of users, means for generating electronic signature creation data and issuing certificates, means for creating time stamps, and a database of electronic signatures and time stamps, wherein the means for generating electronic signature creation data and issuing certificates are configured to generate single-use electronic signature creation data and certificate and to delete the electronic signature creation data after signing one document or message, and wherein the means for creating time stamps are configured to generate a time stamp immediately after the signing of one document or message and before deletion of the electronic signature creation data used to sign the document or message, and optionally to create a new time stamp before the expiry of validity of any time stamp in the database,
- an identity verification authority having means for authentication of users, means for identity proofing of users, and
- an archive provider having a database for storing the signed documents or messages.

2. The system according to claim 1, wherein the electronic signature managing authority further has means for verifying electronic signatures and time stamps.

3. A method for electronic signature creation and management using the system according to claims 1 or 2, and containing the following steps:
- the electronic signature managing authority receives a request to sign a document or message from a user, and the electronic signature managing authority and the identity verification authority perform the authentication of the user,
- the identity verification autority provides to the electronic signature managing authority user identity data of the user;
- the electronic signature managing authority generates an electronic signature creation data and signature certificate;
- the electronic signature managing authority signs the document using the generated electronic signature creation data, thus producing an electronic signature;
- the electronic signature managing authority creates a time stamp for the produced electronic signature, and then deletes the electronic signature creation data;
- the electronic signature managing authority transmits the signed document or message to the archive provider, optionally together with the electronic signature and the time stamp;
- the electronic signature managing authority saves the electronic signature and the time stamp, while the archive provider saves the signed document or message, optionally together with the electronic signature and the time stamp,
- optionally the electronic signature managing authority creates a new time stamp before the expiry of validity of the time stamp, saves the new time stamp, and optionally transmits the new time stamp to the archive provider.

4. The method according to claim 3, wherein the new time stamp is created by the electronic signature managing authority on the basis of the electronic signature and the valid time stamp which are stored in the database of the electronic signature managing authority, optionally also on the basis of all previous time stamps.

5. The method according to claim 3, wherein the new time stamp is created by the electronic signature managing authority in cooperation with the archive provider, on the basis of the electronic signature and the valid time stamp stored in the database of the electronic signature managing authority and the signed document or message stored in the database of the archive provider, optionally also on the basis of all previous time stamps.

6. The method according to any one of claims 3 to 5, wherein the electronic signature creation data only exist in operational memory or in a hardware security module of the electronic signature managing authority.

7. The method according to any one of claims 3 to 6, wherein the electronic signature managing authority stores the electronic signatures and the time stamps, but does not manage and store the archived documents or messages; and wherein only the archive provider stores the archived documents or messages, but the archive provider does not store the electronic signatures and time stamps.

8. The method according to any one of claims 3 to 7, wherein cryptographic elements for the electronic signature creation data are generated at the time when the electronic signature managing authority has a free computing capacity; the generated cryptographic elements for electronic signature creation data are stored solely in the operational memory or in the hardware security module of the electronic signature managing authority; and the said cryptographic elements are then used for generating electronic signature creation data when needed.

9. The method according to any one of claims 3 to 8, which further comprises the step of verification of authenticity and integrity of the signed document or message, in which
- the user or any third party requests the verification by entering the document or message which was subject to signing, and optionally also the electronic signature with the first time stamp, the first time stamp being the stamp which was generated immediately after signing;
- the electronic signature managing authority then provides all the remaining time stamps, as well as the electronic signature if not provided as part of the entry data, from its database;
- the verification is then performed by verification means of the electronic signature managing authority, or the electronic signature managing authority creates a data file in a standard format for verification, and the verification may be performed by a third party.
